# EUROPEAN PATENT APPLICATION

(11) **EP 3 654 304 A1**
(43) Date of publication of application: **20.05.2020**
(21) Application number: 19192629.4
(22) Date of filing: 20.08.2019
(51) Int. Cl.: G07F 11/42, G07F 11/16, B25J 15/00

(54) **COMMODITY TAKE-OUT APPARATUS**

(30) Priority: 14.11.2018 JP 2018213763
(71) Applicant: Toshiba Tec Kabushiki Kaisha, 141-8562 Tokyo (JP)
(72) Inventor: HIRAHARA, Yoshiyuki, Shinagawa-ku, Tokyo 141-8562 (JP)
(74) Representative: Bandpay & Greuter

(57) **Abstract**

In accordance with an embodiment, a commodity take-out apparatus includes an arm and a tilting mechanism and a retaining mechanism which are provided to a distal end portion of the arm. For taking out a commodity arranged on a shelf from the shelf, the arm moves the tilting mechanism and the retaining mechanism to a take-out position of the commodity. The tilting mechanism tilts the commodity. The retaining mechanism retains the tilted commodity and takes out the commodity from the shelf.

## Description

### FIELD

An embodiment described here generally relates to a commodity take-out apparatus.

### BACKGROUND

In recent years, it is desirable to achieve power saving or full automation of a task for selling commodities to customers at a store because of manpower shortage and the like. In the related art, regarding certain kinds of commodities, a customer tells an employee at the store a commodity that the customer wants to purchase and the employee delivers the commodity that the customer wants to purchase by hand as one of sale styles. For example, regarding commodities such as cigarettes and alcoholic drinks, at many stores, an employee verifies customer's age and the like and delivers a commodity to a customer as an operation for the purpose of preventing them to be sold to a minor. Further, commodities such as cigarettes and alcohol are often arranged at a place that customers cannot reach, such as a shelf at the back of a cash register.

When an employee receives an order to purchase such a commodity from a customer, the employee verifies customer's age and the like in a manner that depends on needs and takes out the commodity that the customer wants to purchase from a shelf at the back of a cash register. Further, at some stores, an employee inputs information regarding a commodity taken out from the shelf at the back of a cash register into a payment apparatus as payment target commodity information as an operation. At a store using such an operation, an employee completes payment processing at a payment apparatus into which commodity information has been input and then delivers the commodity to a customer. The work of taking out and selling a commodity in accordance with an order from a customer is a heavy burden on an inexperienced employee.

### SUMMARY OF INVENTION

To solve such problem, there is provided a commodity take-out apparatus configured to take out a commodity of identical commodities, which are arranged on a shelf to be aligned from a front to a back of the shelf, from a front side of the shelf, the apparatus comprising:
an arm including a distal end portion movable to a take-out position depending on an arrangement position of each of the commodities arranged on the shelf;
a tilting mechanism which is provided to the distal end portion of the arm and tilts a take-out target commodity in a front direction of the shelf while the tilting mechanism is held in contact with an upper surface of the take-out target commodity arranged on the shelf in a state in which the distal end portion is moved to the take-out position; and
a retaining mechanism which is provided to the distal end portion of the arm and retains the take-out target commodity in the state in which the take-out target commodity is tilted by the tilting mechanism.

Preferably, the tilting mechanism includes
an articulated first finger which is provided to the distal end portion of the arm and is to be held in contact with the upper surface of the take-out target commodity.

Preferably still, the retaining mechanism sandwiches the take-out target commodity from both side surfaces of the commodity in the state in which the take-out target commodity is tilted by the tilting mechanism.

Preferably yet, the tilting mechanism tilts the take-out target commodity and makes the take-out target commodity fall in the front direction, and
the retaining mechanism receives and retains the take-out target commodity falling in the front direction through the tilting mechanism.

Suitably, the commodity take-out apparatus further comprises:
a microphone that inputs audio; and
a controller that determines a take-out position depending on an arrangement position of the take-out target commodity on a basis of audio input by the microphone.

Suitably still, the articulated first finger of the tilting mechanism tilts the take-out target commodity by moving a distal end portion of the first finger in the front direction while holding the upper surface of the take-out target commodity with the distal end portion of the first finger.

Suitably yet, the retaining mechanism includes
a pair of articulated second fingers which are provided to the distal end portion of the arm and sandwich the take-out target commodity while the pair of articulated second fingers are held in contact with both side surfaces of the take-out target commodity in a state in which the take-out target commodity is tilted by the first finger.

Typically, the second fingers of the retaining mechanism stand by at predetermined positions at which the second fingers of the retaining mechanism are to support the take-out target commodity tilted when the first finger of the tilting mechanism tilts the take-out target commodity.

Typically still, the second fingers of the retaining mechanism sandwich the take-out target commodity after the second fingers of the retaining mechanism support the take-out target commodity at the predetermined positions.

Typically yet, the second fingers of the retaining mechanism take out the take-out target commodity from the shelf by moving the take-out target commodity in a state in which the second fingers of the retaining mechanism sandwich the take-out target commodity.

### BRIEF DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a diagram schematically showing a mounting example of a robot that is a commodity take-out apparatus according to an embodiment.
Fig. 2 is a diagram showing a configuration example of a retaining mechanism provided to an arm of the robot that is the commodity take-out apparatus according to the embodiment.
Fig. 3 is a block diagram showing a configuration example of a control system of the robot that is the commodity take-out apparatus according to the embodiment.
Fig. 4 is a diagram showing a configuration example of a commodity management database to be referenced by the robot that is the commodity take-out apparatus according to the embodiment.
Fig. 5 is a diagram showing a configuration example of a shelf management database to be referenced by the robot that is the commodity take-out apparatus according to the embodiment.
Fig. 6 is a flowchart showing an operation example of the robot that is the commodity take-out apparatus according to the embodiment.
Fig. 7 is a flowchart showing an operation example of the robot that is the commodity take-out apparatus according to the embodiment.
Fig. 8 is a flowchart for describing an operation example of the robot that is the commodity take-out apparatus according to the embodiment.
Fig. 9 is a diagram showing a state in which a holding mechanism of the robot that is the commodity take-out apparatus according to the embodiment tilts a commodity in a front direction of a shelf.
Fig. 10 is a diagram showing a state in which the holding mechanism of the robot that is the commodity take-out apparatus according to the embodiment holds the tilted commodity.

### DETAILED DESCRIPTION

In accordance with one embodiment, a commodity take-out apparatus takes out a commodity of identical commodities, which are arranged on a shelf to be aligned from a front to a back of the shelf, from a front side of the shelf. The apparatus includes an arm, a tilting mechanism, and a retaining mechanism. The arm includes a distal end portion movable to a take-out position depending on an arrangement position of each of the commodities arranged on the shelf. The tilting mechanism is provided to the distal end portion of the arm and tilts a take-out target commodity in a front direction of the shelf while the tilting mechanism is held in contact with an upper surface of the take-out target commodity arranged on the shelf in a state in which the distal end portion is moved to the take-out position. The retaining mechanism is provided to the distal end portion of the arm and retains the take-out target commodity in the state in which the take-out target commodity is tilted by the tilting mechanism.

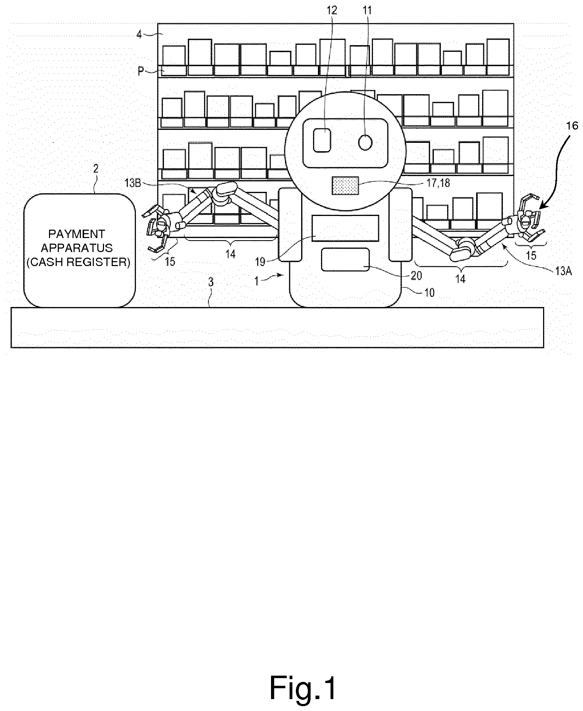

Hereinafter, an embodiment will be described with reference to the drawings. In the drawings, identical symbols denote identical or similar parts. Fig. 1 is a schematic view schematically showing an outer appearance configuration of a transaction system including a commodity take-out apparatus (robot) 1 and a payment apparatus 2 according to the embodiment. The commodity take-out apparatus (hereinafter, simply referred to as the robot) 1 is an apparatus that takes out one of commodities which is specified by a customer (user) from a predetermined commodity arrangement position. In the configuration example shown in Fig. 1, the robot 1 is placed between a cash register table 3 on which a payment apparatus (cash register) 2 is placed and a shelf 4 placed at the back of the cash register table 3, for example. For example, the robot 1 has a humanoid outer appearance which looks like a human being, which is friendly to customers, and recognizes one of the commodities, which the customer wants to purchase, on the basis of voice uttered by a customer. The robot 1 takes out the recognized commodity from the shelf 4.

At the back of the cash register table 3 at which the robot 1 is placed, the shelf 4 on which particular kinds of commodities are arranged is placed. As the commodities arranged on the shelf 4, cigarettes, alcoholic drinks, and the like are conceivable. The shelf 4 is placed while a front (surface at the front) of the shelf 4 faces the cash register table 3. On the shelf 4, the identical commodities are aligned in a line and arranged from the front to a back (surface at the back). Plates P are provided on the front of the shelf 4. Each of the plates P is provided at each position corresponding to an arrangement position (in a line) in which the commodities are aligned in a line and arranged. In other words, the identical commodities corresponding to the plate P are aligned in a line and arranged in the rear of each plate P of the shelf 4. It should be noted that the commodity is taken out from a front side of the shelf 4. That is, the front of the shelf 4 is a surface on a side on which the commodity is taken out from the shelf 4.

A push-out mechanism is provided at each arrangement position on the shelf 4, at which each plate P is provided. Every time a commodity at the front is removed, the push-out mechanism pushes out a commodity or commodities located on the back side to the front side. The push-out mechanism keeps the commodity (commodity at the front) at the head of the line at each arrangement position in a state in which the push-out mechanism is pressed against the plate P. The push-out mechanism may be a mechanism that pushes out the commodity at the end of the line in a front direction of the shelf 4 via an elastic member or may be a mechanism that causes respective commodities to move in the front direction of the shelf 4 due to the own weight of the respective commodities.

It should be noted that in this embodiment to be shown below, the description will be made mainly assuming a case where cigarettes in a box shape as shown in Fig. 1 are placed as the commodities on the shelf 4. It should be noted that the commodities arranged on the shelf 4 only need to be commodities which can be taken out by the robot 1. For example, the commodities arranged on the shelf 4 may be commodities each having a cylindrical shape such as a can, a bottle, and a plastic bottle.

The payment apparatus 2 performs payment for the price of a commodity to be purchased by the customer. In the configuration example shown in Fig. 1, the payment apparatus 2 mounted on the cash register table 3 is electrically connected to the robot 1. The robot 1 and the payment apparatus 2 configure a transaction system for performing a task for paying for the commodity. For example, when the robot 1 takes out the commodity from the shelf 4 and places the taken out commodity on the cash register table 3, the payment apparatus 2 acquires, from the robot 1, information (commodity information) indicating the commodity placed on the cash register table 3. When the payment apparatus 2 acquires the commodity information of the commodity placed on the cash register table 3, the payment apparatus 2 performs payment processing of the commodity placed on the cash register table 3.

In the configuration example shown in Fig. 1, the robot 1 includes a main body 10, a sensor 11, a camera 12, a first arm 13A, a second arm 13B, an arm camera 16, a speaker 17, a microphone 18, a display device 19, and an information input device 20, and the like. The sensor 11, the camera 12, the speaker 17, the microphone 18, the display device 19, the information input device 20, and the like are provided on the front (front surface) of the main body 10. Further, the first arm 13A and the second arm 13B are provided on left- and right-hand sides at the left and right of the main body 10. The main body 10 may include a mechanism configured to be capable of changing the direction. For example, the main body 10 is configured to be capable of cause the front of the main body 10 to face the cash register table 3 and cause the front of the main body 10 to face the shelf 4. Further, the main body 10 may include a movable mechanism. For example, the main body 10 may be configured to be movable toward the cash register table 3 or the shelf 4 in left- and right-hand directions.

The sensor 11 detects a person who is present in front of the main body 10. As shown in Fig. 1, if the main body 10 faces the cash register table 3, the sensor 11 detects a person who approaches the cash register table 3. The sensor 11 only needs to be a sensor capable of detecting the presence/absence of a person. For example, the sensor 11 is an infrared sensor that detects a person or a commodity by using infrared rays.

The camera 12 captures an image of the front of the main body 10 and acquires an image (image data) from the front of the main body 10. For example, if the front of the main body 10 faces the cash register table 3, the camera 12 captures an image of a periphery of the cash register table 3 and acquires an image of the periphery of the cash register table 3. Further, in a case where the front of the main body 10 faces the shelf 4, the camera 12 captures an image of the shelf 4 and acquires the image of the shelf 4. Further, the camera 12 may have a function of adjusting an image-capturing direction, an image-capturing distance, or the like to thereby change an image-capturing area.

The first arm 13A and the second arm 13B each include an articulated arm portion 14 and a holding mechanism 15. The articulated arm portion 14 is an articulated arm mounted on the main body 10 of the robot 1. The holding mechanism 15 is a mechanism that holds a commodity. The articulated arm 14 only needs to freely three-dimensionally move a holding position of the holding mechanism 15. For example, the holding mechanism 15 is provided to a distal end portion of each articulated arm 14. The first arm 13A and the second arm 13B move the articulated arms 14 in a state in which the holding mechanism 15 holds a commodity. With this configuration, the first arm 13A and the second arm 13B perform an operation of taking out the commodity arranged on the shelf 4.

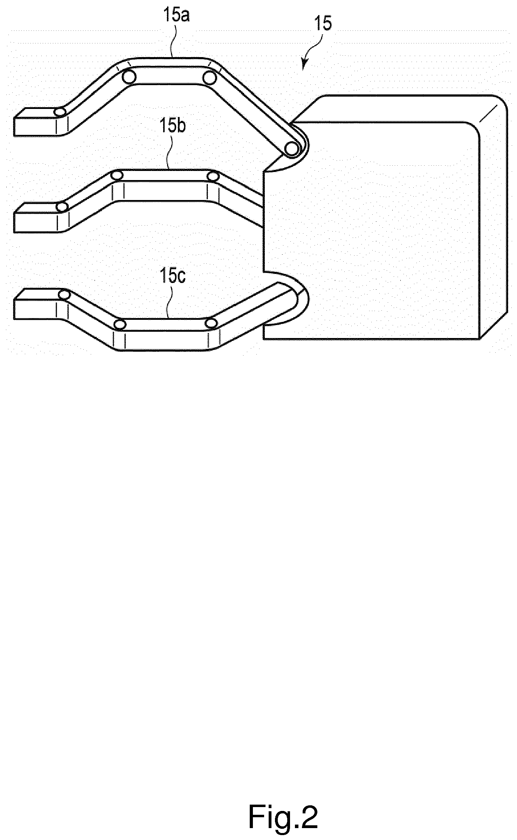

Fig. 2 is a diagram showing a configuration example of the holding mechanism 15. In the configuration example shown in Fig. 2, the holding mechanism 15 includes articulated fingers 15a, 15b, and 15c. The respective fingers 15a, 15b, and 15c are operated by using a plurality of joints as supporting points. The respective fingers 15a, 15b, and 15c are operated to retain a take-out target present on the shelf 4 while tilting the commodity in the front direction of the shelf 4. The finger 15a of the holding mechanism 15 is a tilting mechanism for tilting an upper portion of the commodity in the front direction of the shelf 4. The finger 15a moves the upper surface (upper portion) of the commodity to the front side of the shelf 4, to thereby tilt the upper portion of the commodity in the front direction of the shelf 4. Further, the fingers 15b and 15c serve as a retaining mechanism for retaining the commodity tilted by the finger 15a in the front direction of the shelf 4. In the state in which the finger 15a tilts the upper portion of the commodity in the front direction of the shelf 4, the fingers 15b and 15c sandwich the commodity from side surfaces of the commodity. That is, the holding mechanism 15 shown in Fig. 2 includes the finger 15a as the tilting mechanism that tilts the commodity placed on the shelf 4 in the front direction of the shelf 4 and the fingers 15b and 15c as the retaining mechanism that retains (holds) the commodity.

It should be noted that the holding mechanism 15 is not limited to one including a plurality of fingers. The holding mechanism 15 only needs to include the tilting mechanism that tilts the upper portion of the commodity in the front direction of the shelf 4 and the retaining mechanism that retains the commodity tilted in the front direction of the shelf 4. For example, the tilting mechanism of the holding mechanism 15 may include an adsorption mechanism that adsorbs the commodity and may tilt the commodity in the front direction of the shelf 4 in a state in which the adsorption mechanism sticks to the upper surface of the commodity. In this case, the adsorption mechanism may be configured to change the air pressure at an adsorption portion held in contact with an outer surface of the commodity to thereby control adsorption to and desorption from the commodity.

Further, the retaining mechanism of the holding mechanism 15 may hold the commodity by sticking to the side surface of the commodity. Further, the retaining mechanism may include a sandwiching mechanism having a shape depending on the shape of the side surface of the commodity in a state in which the commodity is arranged on the shelf 4. As a specific example, the sandwiching mechanism to be used in the holding mechanism 15 may be configured to sandwich the commodity by using the sandwiching member having a semicircular shape depending on the shape of the side surface of the commodity as long as the commodity is a cylindrical can, bottle, or the like. Further, the retaining mechanism may retain the commodity by catching the commodity made to fall by the tilting mechanism in the front direction of the shelf 4.

In addition, the first arm 13A and the second arm 13B may be configured to take out the commodity arranged on the shelf 4 in cooperation with each other. For example, the holding mechanism 15 of one first arm 13A (or one second arm 13B) may pull the commodity down in the front direction of the shelf 4 and the holding mechanism 15 of the other second arm 13B (or the other first arm 13A) may catch (retain) the commodity which is falling. In this case, it is sufficient that the holding mechanism 15 of the first arm 13A is configured to tilt the commodity and pull the commodity down in the front direction of the shelf 4 and the holding mechanism 15 of the second arm 13B is configured to catch the pulled down commodity. It is conceivable that the holding mechanism 15 that catches the pulled down commodity is constituted by a receiver including a tray, a bag, a net, and a cup, and the like. In this case, the holding mechanism 15 that catches the pulled down commodity only needs to be capable of putting the caught commodity at a predetermined position or the like on the cash register table 3 by turning the receiver over.

The arm camera 16 is a camera whose image-capturing position is freely movable in a three-dimensional space. In the configuration example shown in Fig. 1, the arm camera 16 is provided to a distal end portion of the first arm 13A and the image-capturing position is moved by an operation of the first arm 13A.
It should be noted that the arm camera 16 may be provided to the second arm 13B and may be provided to both of the first arm 13A and the second arm 13B. Further, the arm camera 16 may be additionally provided as a camera that freely moves the image-capturing position without providing the first arm 13A or the second arm 13B. In this embodiment, the arm camera 16 captures an image of an image-capturing area including a specified commodity (or a commodity arrangement position) and acquires an image of the image-capturing area. An image acquired by image-capturing of the arm camera 16 is used for specifying a position at which the commodity is actually present (actually exists). Further, an image acquired by image-capturing of the arm camera 16 is also used as an image for extracting commodity-specifying information for specifying the commodity or information displayed on the plate P.

It should be noted that the commodity-specifying information only needs to be information read from an outer appearance of the commodity. For example, the commodity-specifying information is a barcode printed on the package of the commodity. Alternatively, the commodity-specifying information may be a literal character string such as numeric characters and literal characters with which the commodity can be identified. Alternatively, the commodity-specifying information may be an image of a label attached to the commodity. Alternatively, the commodity-specifying information may be the entire silhouette of the commodity or the like. The first arm 13A or the second arm 13B may be provided with an arm scanner that reads a barcode that is the commodity-specifying information. The arm scanner that reads the barcode only needs to be configured to read the barcode at a reading position moved by the first arm 13A or the second arm 13B.

The speaker 17, the microphone 18, the display device 19, and the information input device 20 function as a user interface. The speaker 17 outputs voice. For example, the speaker 17 outputs voice of guidance and the like to the user. The microphone 18 inputs voice. For example, the microphone 18 inputs voice uttered by the user. The speaker 17 and the microphone 18 may be an interactive apparatus that inputs and outputs voice in an interactive manner with the user.

The display device 19 displays an image. For example, the display device 19 displays guidance and the like to the user in the form of an image, a text, or the like. The information input device 20 is a device for inputting information. For example, the information input device 20 is a button for verifying user's age. Further, the information input device 20 may be a device that reads a storage medium (ID card or the like) for verifying user's age, user's qualifications, or and the like.

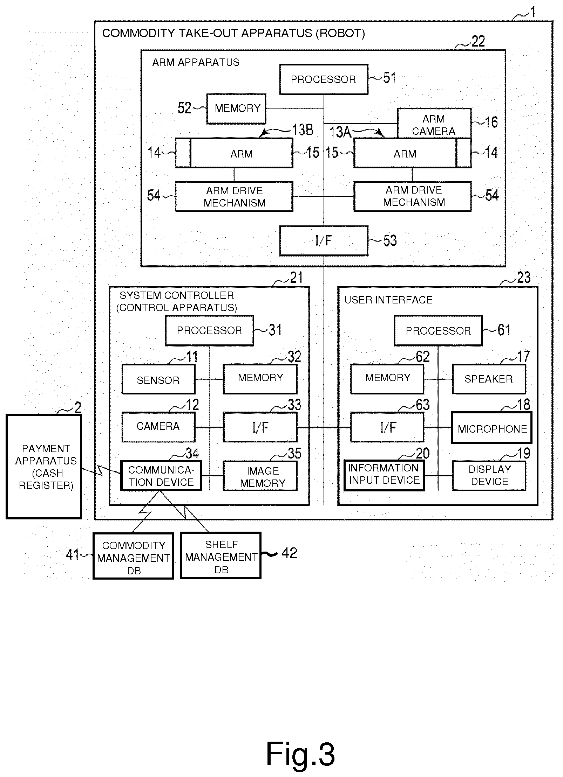

Next, a configuration of a control system of the robot 1 that is the commodity take-out apparatus according to the embodiment will be described. Fig. 3 is a block diagram showing a configuration example of the control system of the robot 1. In the configuration example shown in Fig. 3, the robot 1 is a system including a system controller (control apparatus) 21, an arm apparatus 22, and a user interface 23.

The system controller (controller) 21 comprehensively controls the respective apparatuses of the robot 1. In the configuration example shown in Fig. 3, a system controller 21 includes a processor 31, a memory 32, an interface (I/F) 33, a communication device 34, an image memory 35, the sensor 11, and the camera 12. The processor 31 performs various types of processing by executing a program. The processor 31 is a central processing unit (CPU), for example. The memory 32 includes a memory such as a ROM (Read Only memory), a RAM (Random Access Memory), and a rewritable nonvolatile memory. For example, the memory 32 includes a nonvolatile memory that stores programs, control data, and the like. Further, the memory 32 includes a working memory such as a RAM for temporarily storing data.

The programs stored in the memory 32 include various application programs other than basic programs. The application programs include programs and the like for performing various types of processing to be described later. The processor 31 performs various types of processing to be to be described later by executing various programs to be stored in the memory 32. The interface (I/F) 33 is an interface for communicating with the respective apparatuses of the robot 1.

The communication device 34 is a communication interface for communicating with an external apparatus. In the configuration example shown in Fig. 3, the communication device 34 includes an interface for communicating with the payment apparatus 2. Further, the communication device 34 includes an interface for accessing various databases (DBs). In the configuration example shown in Fig. 3, the communication device 34 includes an interface for connecting to a commodity management database (DB) 41, and a shelf management database (DB) 42, and the like for communication.
The commodity management database 41 is a database for storing information regarding commodities handled at that store. The shelf management database 42 is a database that stores information regarding commodities arranged on the shelf 4. It should be noted that databases including the commodity management database 41, the shelf management database 42, and the like may be stored in an internal storage device of the robot 1.

The sensor 11 detects a person. The sensor 11 is connected to the processor 31. The sensor 11 only needs to detect the presence/absence of a person in a detection range. The sensor 11 supplies a detection signal indicating a result of detection of the person to the processor 31. The camera 12 captures an image of a predetermined image-capturing area and acquires an image (image data) of the image-capturing area. The camera 12 is connected to the processor 31. The image acquired by image-capturing of the camera 12 is stored in the image memory 35. The camera 12 may include a camera drive mechanism that changes the direction (image-capturing direction) and the like in accordance with the control of the processor 31 as a function of controlling the image-capturing area. It should be noted that the robot 1 may include a camera interface for acquiring the image of the image-capturing area of an external camera of the robot 1 instead of the camera 12. In addition, the robot 1 may include a scanner that reads the commodity-specifying information such as a barcode added to the commodity.

In the system controller 21, the processor 31 performs various types of processing by executing the programs stored in the memory 32. For example, the memory 32 stores programs for giving, by the processor 31, control instructions to the respective apparatuses and acquiring information from the respective apparatuses. The processor 31 executes programs to thereby give control instructions to the respective apparatuses and acquire information from the respective apparatuses. For example, the processor 31 instructs the arm apparatus 22 to take out the commodity on the shelf 4 by using the first arm 13A or the second arm 13B.

Further, the memory 32 stores programs for executing commodity determination processing of determining the commodity. The processor 31 executes programs stored in the memory 32 to thereby perform commodity determination processing and the like. The processor 31 performs commodity determination processing of determining the commodity in the image-capturing area of the arm camera 16 on the basis of the image acquired by the arm camera 16 as the commodity determination processing.

Further, the memory 32 may store programs for executing commodity determination processing of determining the commodity and information recognition processing of recognizing information (number) displayed on the plate P. With this configuration, the processor 31 detects commodity-specifying information such as a barcode from the image acquired by the arm camera 16 and executes commodity determination processing of determining (recognizing) the commodity. Further, the processor 31 also executes information recognition processing of recognizing information shown on the plate fixed on the shelf 4 on the basis of the image acquired by the arm camera 16. Further, the processor 31 may be configured to perform processing of estimating characteristics (age and the like) of the user located in front of the cash register table 3 (in front of the cash register) on the basis of the image acquired by the camera 12.

Next, a configuration example of a control system of the arm apparatus 22 in the robot 1 will be described. In the configuration example shown in Fig. 3, the arm apparatus 22 includes a processor 51, a memory 52, an interface (I/F) 53, arm drive mechanisms 54, the first arm 13A, the second arm 13B, an arm camera 16, and the like.

The processor 51 performs various types of processing by executing programs. The processor 51 is a CPU, for example. The memory 52 includes a memory such as a ROM, a RAM, and a rewritable nonvolatile memory. For example, the memory 52 includes a nonvolatile memory that stores programs, control data, and the like. Further, the memory 52 includes a working memory such as a RAM for temporarily storing data.

The interface (I/F) 53 is an interface for communicating with the system controller 21. In this embodiment, the processor 51 controls the respective units in accordance with a control instruction supplied from the processor 31 of the system controller 21 via the interface 53.

Each of the arm drive mechanisms 54 operates the articulated arm 14 and the holding mechanism 15. That is, the first arm 13A and the second arm 13B include the articulated arms 14 and the holding mechanisms 15 and are operated by the arm drive mechanisms 54. For example, the arm drive mechanism 54 moves the articulated arm 14 to move the holding mechanism 15 to a holding position in accordance with an operation instruction from the system controller 21. Further, the arm drive mechanism 54 operates the holding mechanism 15 to cause the holding mechanism 15 to hold the commodity in accordance with an instruction from the system controller 21.

Further, the arm drive mechanism 54 operates the articulated arm 14 to move the commodity held by the holding mechanism 15 to a delivery position (on the cash register table 3) in accordance with an instruction from the system controller 21. With this configuration, the arm drive mechanism 54 is capable of causing the holding mechanism 15 to hold the commodity arranged on the shelf 4 in accordance with an instruction from the system controller 21. Further, the arm drive mechanism 54 operates the articulated arm 14 to move the position of the arm camera 16 provided to the distal end portion of the articulated arm 14 in accordance with an instruction from the system controller 21.

Next, a configuration example of the control system of the user interface (UI) 23 in the robot 1 will be described. The user interface 23 provides the user with information as audio, an image, or the like. Further, the user interface 23 inputs information from the user and outputs information as a response to the input information. The user interface (UI) 23 recognizes voice uttered by the user and also functions as an interactive apparatus that outputs voice guidance.

In the configuration example shown in Fig. 3, the user interface 23 includes a processor 61, a memory 62, an interface (I/F) 63, the speaker 17, the microphone 18, the display device 19, the information input device 20, and the like.

The processor 61 performs various types of processing by executing programs. The processor 61 is a CPU, for example. The memory 62 includes a memory such as a ROM, a RAM, and a rewritable nonvolatile memory. The interface (I/F) 63 is an interface for communicating with the system controller 21.

The processor 61 outputs voice through the speaker 17 in accordance with an instruction and the like from the system controller 21. Further, the processor 61 supplies audio information input into the microphone 18 to the system controller 21. With this configuration, the processor 61 inputs and outputs voice in an interactive manner with the user through the speaker 17 and the microphone 18. Further, the processor 61 displays information on the display device 19 in accordance with an instruction and the like from the system controller 21. Further, the processor 61 acquires information input into the information input device 20.

It should be noted that the robot 1 which is the commodity take-out apparatus may be configured integrally with the payment apparatus 2. Further, the robot 1 may have a function of performing payment for the price of the commodity. In addition, the robot 1 may have a settlement function by a credit card, electronic money, or the like. In this case, the robot 1 is enabled to perform not only take-out of the commodity but also settlement of the amount of the taken out commodity by a credit card, electronic money, or the like. For example, the robot 1 may take out the commodity specified by the user (customer) and deliver the commodity to the customer after settlement is completed. Further, the robot 1 may take out the commodity after settlement of the commodity specified by the customer is completed.

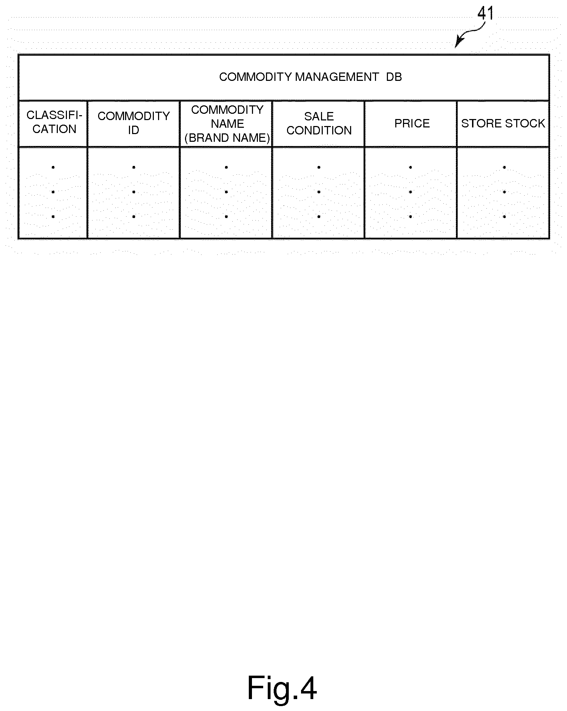

Next, the commodity management database 41 and the shelf management database 42 will be described. Fig. 4 is a diagram showing a configuration example of the commodity management database 41. The commodity management database 41 stores information regarding the commodity handled at the store where the shelf 4 is placed. In the example shown in Fig. 4, the commodity management database 41 stores information regarding classification, a commodity ID, a commodity name (brand name), a sale condition, a price, store stock, and the like with respect to each commodity handled at the store where the shelf 4 is placed.

The classification is information indicating classification of the commodity. The commodity ID is identification information for identifying the commodity. The commodity name (brand name) is information indicating the name of the commodity. The sale condition is information indicating a condition for selling the commodity. For example, the age to sell is stored for a sale condition regarding an age restricted commodity. The price is information indicating the price of the commodity. The store stock is information indicating stocks stored in the store.
The store stock is information indicating the number of stocks, for example.

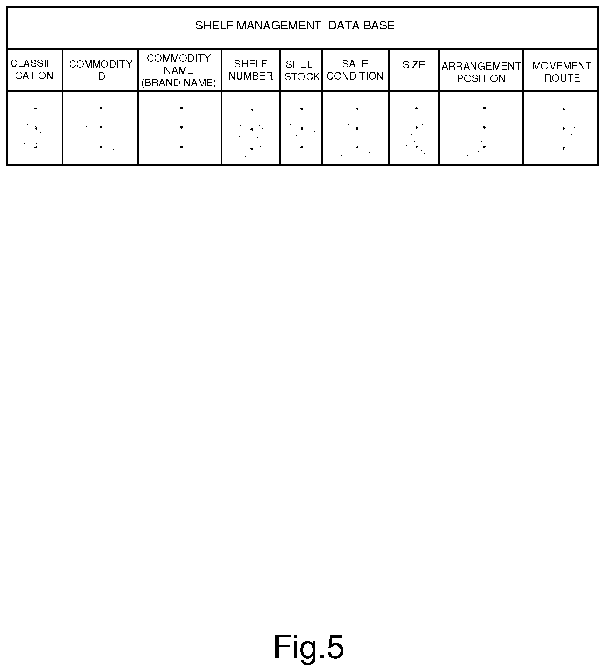

Fig. 5 is a diagram showing a configuration example of the shelf management database 42. The shelf management database 42 stores information regarding the commodity arranged on the shelf 4. In the example shown in Fig. 5, the shelf management database 42 stores information regarding classification, a commodity ID, a commodity name (brand name), a shelf number, shelf stock, a sale condition, a size, an arrangement position, a movement route, and the like with respect to each commodity arranged on the shelf 4.

The classification is information indicating classification of the commodity. The commodity ID is identification information of the commodity. The commodity name (brand name) is information indicating the name of the commodity. The shelf number indicates a number set to a place where the commodity is arranged. The shelf number is a number set for each commodity. Further, the shelf number includes a number (number of plate P) displayed on the plate P fixed corresponding to the arrangement position at which the commodity is arranged. The shelf stock is information indicating whether or not the commodity is present on the shelf 4. Further, the shelf stock may be information indicating the number of commodities which should be present on the shelf 4.

The sale condition is information indicating a condition for selling the commodity. For example, the age to sell is stored for the sale condition regarding the age restricted commodity. The size is information indicating the size of the commodity. For example, the size indicates a height, a width, and a depth in a state in which the commodity is arranged on the shelf 4. The arrangement position is information indicating a position at which the commodity is arranged. The arrangement position may be coordinates in a three-dimensional space or may be two-dimensional coordinates on a front surface of the shelf 4. The movement route is information indicating a route for moving the first arm 13A from the stand-by position to a take-out position (to be described later) corresponding to the arrangement position. The movement route may be configured to be additionally written every time the take-out processing is executed. Alternatively, the movement route may be configured to be updated to the latest route.

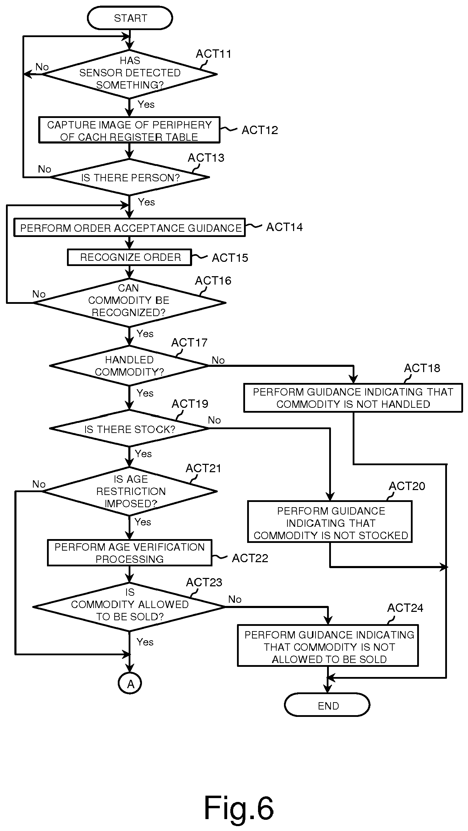

Next, an operation of the robot 1 that is the commodity take-out apparatus according to the embodiment will be described. Figs. 6 to 8 are flowcharts showing an operation example of the robot 1 that is the commodity take-out apparatus according to the embodiment. In ACT11 shown in Fig. 6, the robot 1 is under a stand-by state. Under the stand-by state, that is, the processor 31 of the system controller 21 monitors the presence/absence of a person in the vicinity of the cash register table 3 by using the sensor 11. That is, the sensor 11 uses the vicinity of the cash register table 3 as a detection range. When the sensor 11 detects a person (YES in ACT11), the processing of the processor 31 shifts to ACT12. In ACT12, the processor 31 causes the camera 12 to capture an image of an image-capturing area including the periphery of the cash register table 3 (image-capturing area for detecting a person). The image-capturing area for detecting a person only needs to be such an image-capturing area that an image of a person detected by the sensor 11 or a person who appears in front of the cash register table 3 for paying for the commodity, for example, can be captured.

For example, the processor 31 sets the camera 12 to use a region including the space in front of the cash register table 3 as the image-capturing area for detecting a person. Further, the processor 31 may estimate a position of a person detected by the sensor 11 and control the direction, the position, and the like of the camera 12 in accordance with the position of the estimated person. It should be noted that the processor 31 may cause the image memory 35 to save an image captured and acquired by the camera 12. Further, the processor 31 may cause the image memory 35 to save a plurality of images acquired by continuously capturing the plurality of images with the camera 12.

When the processor 31 causes the camera 12 to capture an image of the periphery of the cash register table 3 as described above, then in ACT13, the processor 31 determines whether or not a person who is the user is present in the image acquired by the camera 12. That is, the processor 31 is capable of detecting the user present in the vicinity of the cash register table 3 from the image captured and acquired by the camera 12. The processor 31 determines whether or not the user is present in the vicinity of the cash register table 3 on the basis of a detection result of the user from the image acquired by the camera 12. If the processor 31 determines that the user is not present in the vicinity of the cash register table 3 (NO in ACT13), the processing of the processor 31 returns to ACT11 for executing the above-mentioned processing again.

If the processor 31 determines that the user is present in the vicinity of the cash register table 3 (YES in ACT13), the processing of the processor 31 shifts to ACT14. In ACT14, the processor 31 performs guidance for the user present in the vicinity of the cash register table 3 via the user interface 23. For example, the processor 31 outputs salutation, for example, "Hello" as voice through the speaker 17 of the user interface 23.

In addition, the processor 31 may output order acceptance guidance indicating to accept an order of the commodity on the shelf 4 as voice through the speaker 17. For example, the processor 31 causes the speaker 17 to output voice guidance, for example, "Accepting the order of the commodity (cigarettes) on the shelf. Please say the number of the plate (nameplate) corresponding to a desired commodity name or commodity". Further, the processor 31 may be configured to display the order acceptance guidance on the display device 19 of the user interface 23.

When the processor 31 performs order acceptance guidance to the user as described above, then in ACT15, the processor 31 accepts the order of the commodity from the used through the microphone 18 and performs recognition processing of contents of the order. That is, the processor 31 analyzes the voice (audio) acquired through the microphone 18 in a state in which the order can be accepted, to thereby perform recognition processing of the contents of the order and accept the order of the commodity which is uttered by the user. For example, the processor 31 recognizes a keyword for example, the "commodity name", the "number (plate number)", or the "commodity name and number" from the voice acquired through the microphone 18. If the user says "Cigarettes No. 10, please" for example, the processor 31 acquires words such as "Cigarettes", "No. 10", and "please" by voice recognition. When the processor 31 acquires "Cigarettes" and "No. 10" by voice recognition, the processor 31 recognizes that the cigarettes with the plate of No. 10 is ordered. Subsequently, in ACT16, the processor 31 determines whether or not the ordered commodity can be recognized by recognition processing described above. If the processor 31 determines that the ordered commodity cannot be recognized (NO in ACT16), the processing of the processor 31 returns to ACT14.

If the processor 31 determines that the ordered commodity can be recognized and receives the order of the commodity (YES in ACT16), the processing of the processor 31 shifts to ACT17. In ACT17, the processor 31 determines whether or not the ordered commodity is the commodity handled by that robot 1. For example, when the processor 31 receives the order with the commodity name, the processor 31 refers to the shelf management database 42 and determines whether or not the commodity whose order has been received (commodity having the commodity name recognized as voice) is the commodity arranged on the shelf 4 (commodity handled by the robot). Further, when the processor 31 receives the order with the number of the plate P, the processor 31 may determine whether or not the plate P of the number with which the order has been received is arranged on the shelf 4.

If the ordered commodity is not the handled commodity (NO in ACT17), the processing of the processor 31 shifts to ACT18. In ACT18, the processor 31 performs voice guidance or the like, indicating that the ordered commodity is not the handled commodity. For example, the processor 31 outputs voice guidance saying "We are sorry to inform you that the ordered commodity is not handled" through the speaker 17. Further, the processor 31 may display not only the voice guidance but also the guidance indicating that it is not handled on the display device 19. The processor 31 terminates the series of processing for the ordered commodity when the not-handling guidance is performed as described above. In this case, the processing of the processor 31 may return to ACT14 for receiving a next order.

If the ordered commodity is handled (YES in ACT17), the processing of the processor 31 shifts to ACT19. In ACT19, the processor 31 determines whether or not a stock (shelf stock) of the ordered commodity is present on the shelf 4. For example, the processor 31 refers to the shelf management database 42 and determines whether or not the shelf stock of the ordered commodity (commodity having the commodity name recognized as voice) is present. Further, the processor 31 may be configured to refer to the commodity management database 41 and determine whether or not the stock of the ordered commodity is present.

If the processor 31 determines that the stock of the ordered commodity is not present (NO in ACT19), the processing of the processor 31 shifts to ACT20. In ACT20, the processor 31 performs guidance indicating that the ordered commodity is not stocked (in a sold out state). For example, the processor 31 outputs voice guidance indicating that the shelf stock of the commodity is not present, for example, "We are sorry to inform you that the commodity you ordered is currently sold out" through the speaker 17. Further, the processor 31 may display not only the voice guidance but also guidance indicating that no stocks are present on the display device 19. When the processor 31 performs guidance indicating that no stocks are present, the processor 31 terminates the series of processing for the ordered commodity. In this case, the processing of the processor 31 may return to ACT14 for receiving a next order.

If the processor 31 determines that the stock of the ordered commodity is present (YES in ACT19), the processing of the processor 31 shifts to ACT21. In ACT21, the processor 31 verifies whether or not the ordered commodity has a sale condition (e.g., age restriction). For example, the processor 31 refers to the shelf management database 42 and verifies whether or not the ordered commodity has the sale condition. In this embodiment, the cigarettes are assumed as the commodity arranged on the shelf 4. The cigarettes are the commodity forbidden to sell to a person under 20-year-old, for example, and the ordered commodity is the commodity having the sale condition (age restriction).

If the ordered commodity has the sale condition (YES in ACT21), the processing of the processor 31 shifts to ACT22. In ACT22, the processor 31 executes processing of verifying whether or not the ordered commodity is allowed to be sold to the user. Here, the description will be made assuming that the ordered commodity is cigarettes forbidden to be sold to a user under 20-year-old. That is, in a case of receiving the order of the cigarettes, the processor 31 executes processing of verifying whether or not the user is 20-year-old or more (age verification processing).

The age verification processing may be processing of verifying the age on the basis of declaration of the user or may be processing of verifying the age on the basis of an ID card presented by the user. In the former case, the processor 31 requests the user to make an input into a declaration button to declare that the user is 20-year-old or more in the information input device 20. When detecting the input into the button to declare that the user is 20-year-old or more, the processor 31 determines that the commodity (cigarettes) is allowed to be sold to the user. In this case, the processor 31 may take a face image of the user with the camera 12 for verification and save the face image.

Further, in a case of verifying the age on the basis of the ID card, the information input device 20 of the robot 1 includes a card reader. The processor 31 acquires user's age on the basis of information read by the card reader from the ID card presented by the user. If user's age is 20-year-old or more, the processor 31 determines that the commodity (cigarettes) is allowed to be sold to the user. Further, the processor 31 may be configured to capture an image of a card surface of the ID card presented by the user with the camera 12 and recognize (acquire) user's age described on the card surface from the acquired image.

It should be noted that in a case where the operation of sale style for the commodity (cigarettes) is an operation assuming that the user is a registrant (customer) whose age and the like have been registered, the processor 31 may determine which registrant the user is and verify the age. In this case, the processor 31 only needs to perform personal authentication by using information read from a storage medium such as a card presented by the user or using biometric information acquired from the user (e.g., face image taken by the camera 12).

In ACT23, the processor 31 determines whether or not the ordered commodity is allowed to be sold to the user on the basis of a result of the age verification processing. If it cannot be determined that the ordered commodity is allowed to be sold to the user (NO in ACT23), the processing of the processor 31 shifts to ACT24. In ACT24, the processor 31 performs guidance indicating that the ordered commodity is not allowed to be sold. That is, if the processor 31 receives the order of the cigarettes, the processor 31 determines that the cigarettes are not allowed to be sold and performs guidance indicating that the cigarettes are not allowed to be sold if it cannot be verified that the user is 20-year-old or more. For example, the processor 31 outputs voice guidance indicating that the commodity is not allowed to be sold, for example, "We cannot sell it to you because it cannot be verified that you are 20-year-old or more" through the speaker 17. Further, the processor 31 may display not only the voice guidance but also the guidance indicating that the cigarettes are not allowed to be sold on the display device 19. When the guidance indicating that the cigarettes are not allowed to be sold is performed in this manner, the processor 31 terminates the series of processing for the user.

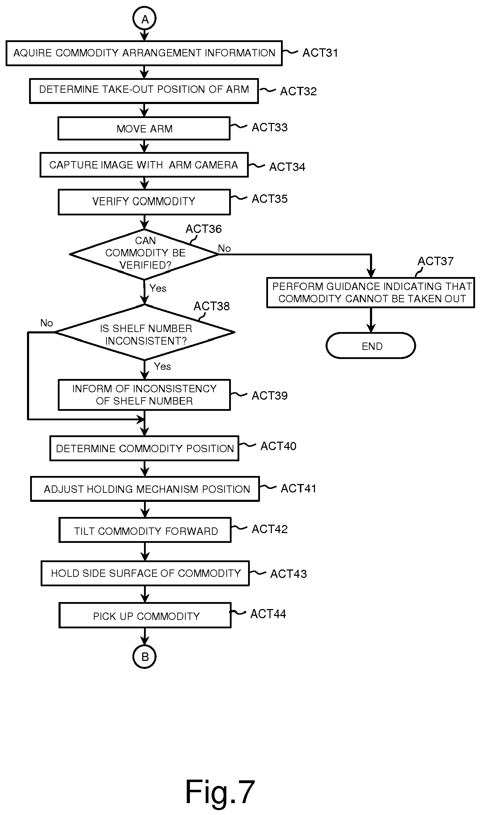

If the processor 31 can determines that the ordered commodity is allowed to be sold to the user (YES in ACT23), the processor 31 starts processing of taking out the ordered commodity from the shelf 4. Further, if the ordered commodity does have a sale condition (NO in ACT21), the processor 31 starts processing of taking out the ordered commodity from the shelf 4. First of all, in ACT31 shown in Fig. 7, the processor 31 acquires information (arrangement information) regarding the arrangement position at which the ordered commodity is arranged on the shelf 4 from the shelf management database 42.

When the processor 31 acquires the arrangement information of the ordered commodity in this manner, then in ACT32, the processor 31 determines a position to move the distal end portion of the first arm 13A (or the second arm 13B) provided with the holding mechanism 15 that holds the commodity. When the processor 31 determines the take-out position, then in ACT33, the processor 31 operates the first arm 13A to move the distal end portion of the first arm 13A (or the second arm 13B) to the determined take-out position. For example, by using a position which is at a predetermined distance from a front surface of the ordered commodity at the arrangement position on the shelf 4 as the take-out position, the processor 31 moves the distal end portion of the first arm 13A to the take-out position. It should be noted that hereinafter, the description will be made assuming that the articulated arm 14 and the holding mechanism 15 of the first arm 13A take out the ordered commodity. It should be noted that the second arm 13B may perform the operation of the first arm 13A which will be described below.

Further, the movement route of the first arm 13A may be stored in the shelf management database 42 for each commodity arranged on the shelf 4. In this case, the processor 31 moves the first arm 13A on the basis of the movement route stored in the shelf management database 42. The movement route in which the first arm 13A has been moved may be configured to be actually recorded (updated or additionally written) in the shelf management database 42 every time take-out of the commodity is carried out.

When the processor 31 moves the arm 13A in the above-mentioned manner, then in ACT34, the processor 31 captures an image of the image-capturing area including the arrangement position of the ordered commodity by the use of the arm camera 16 and acquires the image. When the arm camera 16 captures the image, then in ACT35, the processor 31 verifies that the ordered commodity which can be taken out actually exists on the basis of the image acquired by the arm camera 16. For example, if the processor 31 receives the order with the commodity name, the processor 31 verifies that the ordered commodity having the ordered commodity name actually exists on the shelf 4.

In ACT36, the processor 31 determines whether or not the fact that the ordered commodity actually exists on the shelf 4 can be verified in the verification processing. If the processor 31 determines that the fact that the ordered commodity actually exists on the shelf 4 cannot be verified (NO in ACT36), the processing of the processor 31 shifts to ACT37. In ACT37, the processor 31 informs the user of the fact that the ordered commodity cannot be taken out. For example, the processor 31 outputs voice guidance, for example, "We are sorry to inform you that the commodity cannot be identified" through the speaker 17 and terminates the series of processing related to the ordered commodity.

Further, if the processor 31 determines that the fact that the ordered commodity actually exists on the shelf 4 can be verified (YES in ACT36), the processing of the processor 31 shifts to ACT38. In ACT38, the processor 31 verifies whether or not the number of the plate P at the position corresponding to the ordered commodity which can be verified is inconsistent. The processor 31 recognizes the number displayed on the plate P at the position corresponding to the ordered commodity on the basis of the image acquired by the arm camera 16. When the processor 31 recognizes the number displayed on the plate P, the processor 31 determines whether or not the recognized number is identical to the number (number of the ordered commodity) which should be set to the plate P for the ordered commodity. The number which should be set to the plate P for the ordered commodity is information regarding the number of the ordered commodity stored in the shelf management database 42. That is, the processor 31 refers to the shelf management database 42 and determines whether or not the number (recognized number) of the plate P corresponding to the ordered commodity is identical to the number of the ordered commodity (number set to the ordered commodity) stored in the shelf management database 42.

For example, it is assumed that the processor 31 has received an order saying "xxx (commodity name, brand name), please" from the user and has verified that the ordered commodity having the commodity name of "xxx" actually exists on the shelf 4 (see YES in ACT36). In this case, the processor 31 captures an image of an image-capturing area including a position at which the ordered commodity having the commodity name of "xxx" is placed by the use of the arm camera 16. The processor 31 recognizes the number of the plate P mounted corresponding to the ordered commodity on the basis of the image acquired by the arm camera 16 and determines whether or not the number of the recognized plate P is identical to the number set to the ordered commodity. In other words, the processor 31 determines whether or not the number of the ordered commodity, the number of the plate P attached corresponding to the ordered commodity is identical to the number of the ordered commodity.

If the number of the plate P attached corresponding to the ordered commodity is inconsistent (YES in ACT38), the processing of the processor 31 shifts to ACT39. In ACT39, the processor 31 informs a manager or an employee of the fact that the number of the plate is inconsistent. For example, the processor 31 sends mail or a message indicating that the number of the plate attached corresponding to the commodity having the ordered commodity name is inconsistent to the manager or the employee. Here, the processor 31 has verified that the ordered commodity having the ordered commodity name actually exists on the shelf 4 (see YES in ACT 36). Therefore, the processor 31 shifts to ACT40 and takes out the ordered commodity after the processor 31 informs the manager of the fact that the number of the plate corresponding to the ordered commodity is inconsistent.

It should be noted that when the processor 31 receives the order with the number of the plate without specifying the commodity name, the processor 31 sets the commodity present at the arrangement position corresponding to the number of the plate as the ordered commodity. In this case, the processor 31 may skip the processing of ACT38 and 39.

Further, when the processor 31 receives the order including both of the number of the plate and the commodity name, the arm camera 16 may be configured to capture an image of the arrangement position corresponding to the number of the plate. In this case, the processor 31 may verify whether or not the commodity having the ordered commodity name actually exists at the arrangement position corresponding to the plate having the number (ordered number) ordered on the basis of the image acquired by the arm camera 16. If the ordered commodity is not absent at the arrangement position corresponding to the plate of the ordered number, the processor 31 may perform guidance indicating that the ordered commodity is absent to the user.

For example, when the processor 31 receives an order saying "xxx (commodity name, brand name) No. 10, please", the processor 31 verifies whether or not the commodity having the commodity name of "xxx" actually exists at the position corresponding to the plate of No. "10". If the commodity having the commodity name of "xxx" does not actually exist at the position corresponding to the plate of No. "10", the processor 31 may output voice guidance saying "We are sorry to inform you that "xxx" is currently sold out", for example, through the speaker 17.

Further, when the processor 31 receives an order including both of the number of the plate and the commodity name, the processor 31 may verify matching between the number of the plate and the commodity name on the basis of the shelf management database 42. For example, when the processor 31 receives an order saying "xxx (commodity name, brand name) of No. 10, please", the processor 31 verifies whether or not the commodity placed in the plate of No. "10" is set as "xxx" in the shelf management database 42. If commodity arranged at the arrangement position of the plate of No. "10" is not "xxx", the processor 31 may output voice guidance saying, for example, "We are sorry to inform you that "xxx" is currently sold out" through the speaker 17.

If the processor 31 determines that the number of the plate P attached corresponding to the ordered commodity is not inconsistent (NO in ACT38), the processing of the processor 31 shifts to ACT40. In ACT40, the processor 31 determines a position at which the ordered commodity (take-out target commodity) actually exists on the basis of the image acquired by the arm camera 16. Since the identical commodities are aligned in a line and arranged from the front to the back on the shelf 4, the commodity which is the take-out target is a commodity at the front of the shelf 4 (at the head of the line). It should be noted that the take-out target commodity present at the front of the shelf 4 is not constantly in the same position and direction and can be in a position slightly deviated from a predetermined arrangement position. Therefore, the processor 31 determines the position at which the take-out target commodity actually exists on the basis of the image acquired by the actual arm camera 16.

When the processor 31 determines the position at which the take-out target commodity actually exists, then in ACT41, the processor 31 adjusts the position (take-out position) of the distal end portion of the articulated arm 14 of the first arm 13A on the basis of the position at which the commodity actually exists. In this embodiment, the plate P is provided on the shelf 4 just in front of the commodities aligned in a line and arranged from the front to the back. Therefore, a lower part of the take-out target commodity present at the front of the shelf 4 as viewed from the side of the first arm 13A is hidden by the plate P. The holding mechanism 15 of the first arm 13A holds a part of the take-out target commodity which is above the plate P. The processor 31 determines the take-out position in accordance with the part of the take-out target commodity which is above the plate P on the basis of the image acquired by the arm camera 16. The processor 31 determines the take-out position to thereby adjust the position of the holding mechanism 15 of the first arm 13A.

When the processor 31 adjusts the position of the distal end portion of the articulated arm 14 of the first arm 13A in accordance with the position at which the take-out target commodity actually exists, the processor 31 executes the operation for the holding mechanism 15 to hold the take-out target commodity. The processor 31 determines a position of the upper surface of the take-out target commodity which actually exists on the shelf 4 on the basis of the position of the commodity which is determined on the basis of the image acquired by the arm camera 16. In addition, the processor 31 determines positions of the both side surfaces of the commodity on the basis of the position of the take-out target commodity which is determined on the basis of the image acquired by the arm camera 16, the size of the commodity, and the like.

When the processor 31 determines the upper surface of the position of the commodity in this manner, then in ACT42, the processor 31 operates the finger 15a as the tilting mechanism provided to the arm 13A to tilt the take-out target commodity in the front direction of the shelf 4. In ACT43, under the state in which the commodity is tilted in the front direction of the shelf 4, the processor 31 retains the commodity in the state in which the commodity is tilted in the front direction of the shelf 4 by holding the commodity with the fingers 15b and 15c as the retaining mechanism provided to the distal end portion of the articulated arm 14 of the first arm 13A. When the fingers 15b and 15c as the retaining mechanism hold the commodity, then in ACT44, the processor 31 operates the articulated arm 14 of the first arm 13A to pick up the commodity held by the fingers 15b and 15c from the shelf 4.

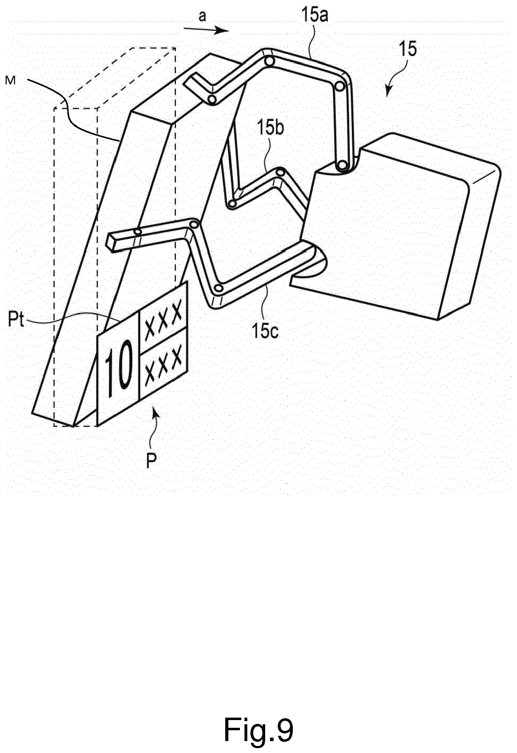

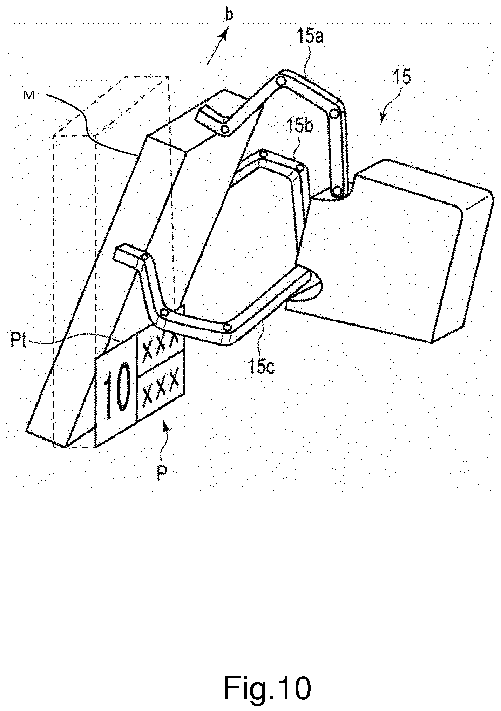

Fig. 9 is a diagram showing a state in which the holding mechanism 15 of the arm 13A tilts a commodity M in the front direction of the shelf 4. Fig. 10 is a diagram showing a state in which the holding mechanism 15 of the first arm 13A holds the commodity M tilted in the front direction of the shelf 4. As shown in Fig. 9, the holding mechanism 15 of the arm 13A moves the distal end portion of the finger 15a in the front direction of the shelf 4 (in a direction indicated as the arrow a shown in the figure) while holding the upper surface of the commodity M with the distal end portion of the finger 15a as the tilting mechanism. With this configuration, since the upper surface of the commodity M is moved in the front direction of the shelf 4, the upper part of the commodity M is tilted in the front direction of the shelf 4 by using an upper end portion Pt of the plate P as a supporting point.

Further, when the finger 15a tilts the commodity M in the front direction of the shelf 4, the fingers 15b and 15c stand by at positions at which the fingers 15b and 15c support the commodity M tilted by the finger 15a in the front direction of the shelf 4 as shown in Fig. 9. The positions at which the fingers 15b and 15c support the commodity M tilted in the front direction of the shelf 4 are set to be height positions between the upper end portion Pt of the plate P and the upper surface of the commodity. It should be noted that the positions at which the fingers 15b and 15c support the commodity M tilted in the front direction of the shelf 4 are set in accordance with characteristics of each commodity such as a commodity arrangement state, a commodity weight, and the rigidity of the commodity outer shape.

Further, the commodity M having the upper surface moved in the front direction of the shelf 4 by the finger 15a as shown in Fig. 9 is tilted in the front direction of the shelf 4 by using the upper end portion Pt of the plate P as the supporting point. Therefore, if the positions for supporting the commodity M is positions higher than a middle position between the upper end portion Pt of the plate P and the upper surface of the commodity, the commodity tilted in the front direction of the shelf 4 can be easily sandwiched by the fingers 15b and 15c at the side surfaces of the commodity. Therefore, the positions at which the fingers 15b and 15c support the commodity M tilted in the front direction of the shelf 4 may be set to be the positions higher than the middle position between the upper end portion Pt of the plate P and the upper surface of the commodity.

When the finger 15a tilts the commodity M in the front direction of the shelf 4 by a predetermined angle, the fingers 15b and 15c as the retaining mechanism support the commodity M and then holds (sandwiches) the commodity M by being brought into contact with the both side surfaces of the commodity M in the state in which the commodity M is tilted in the front direction of the shelf 4 as shown in Fig. 10. The distal end portion of the finger 15b and the distal end portion of the finger 15c sandwich the commodity M by holding the both side surfaces of the commodity M together. The distal end portion of the finger 15b and the distal end portion of the finger 15c which hold (sandwich) the commodity M take out the commodity M from the shelf 4 by moving upward (in a direction indicated as the arrow b shown in Fig. 10). It should be noted that on the shelf 4, the line for the taken out commodity is pushed from the back by an amount corresponding to the taken out commodity and a commodity arranged next to the taken out commodity is held in contact with the plate P.

Further, in the processing in ACT42 to ACT44 of Fig. 7, the holding mechanism 15 of the one arm (first arm 13A) may make the commodity fall to the front side of the shelf 4 and the holding mechanism 15 of the other arm (second arm 13B) may retain the commodity falling to the front side of the shelf 4. For example, the processor 31 moves the upper surface of the take-out target commodity in the front direction of the shelf 4 and makes the commodity fall in the front direction of the shelf 4 through the holding mechanism 15 of the one first arm 13A. Further, before the holding mechanism 15 of the first arm 13A makes the commodity fall, the processor 31 moves the holding mechanism 15 of the other second arm 13B to a position at which the other second arm 13B is to catch the commodity falling in the front direction of the shelf 4. With this configuration, when the holding mechanism 15 of the first arm 13A makes the commodity fall in the front direction of the shelf 4, the holding mechanism 15 of the second arm 13B can catch (retain) the commodity falling in the front direction of the shelf 4.

In addition, if the holding mechanism 15 cannot hold even when the holding mechanism 15 tilts the commodity in the front direction of the shelf 4, the holding mechanism 15 may put the finger 15a on the upper surface of the commodity and sandwich the commodity by the use of the fingers 15b and 15c in such a manner that the fingers 15b and 15c hold upper parts of the both side surfaces of the commodity. In this case, the articulated arm 14 may be operated to lifting the commodity sandwiched by the fingers 15b and 15c at the upper parts of the both side surfaces straight up and pulling the commodity in the front direction of the shelf 4. Further, the articulated arm 14 may be operated to pull the commodity sandwiched by pulling the fingers 15b and 15c at the upper parts of the both side surfaces obliquely upward.

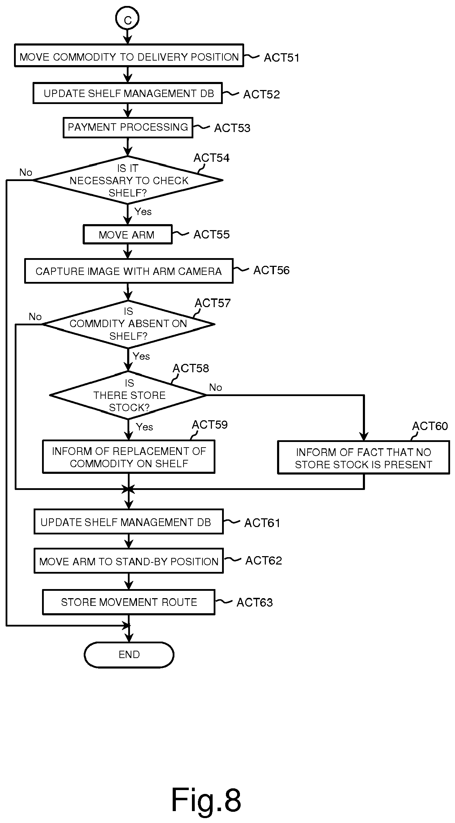

When the processor 31 picks up (retains) the commodity held by the holding mechanism 15, then in ACT51 shown in Fig. 8, the processor 31 operates the articulated arm 14 of the first arm 13A to move the commodity to the delivery position. For example, the processor 31 controls the first arm 13A to transport the commodity held by the holding mechanism 15 of the first arm 13A onto the cash register table 3 as the delivery position. In this case, the articulated arm 14 of the first arm 13A moves the commodity, which is held by the holding mechanism 15 and picked up from the shelf 4, to the cash register table 3. With this configuration, the ordered commodity which has been present on the shelf 4 is taken out by the first arm 13A and is transported onto the cash register table 3. It should be noted that the delivery position to which the commodity taken out from the shelf 4 is moved is not limited to an area on the cash register table 3. For example, the processor 31 may perform control to directly deliver the commodity held by the holding mechanism 15 of the arm 13A to the user.

When the arm 13A transports the commodity to the delivery position, then in ACT52, the processor 31 stores information regarding the taken out commodity (commodity placed on the cash register table 3) in the shelf management database 42 and updates the shelf management database 42. For example, the processor 31 stores information indicating the take-out position at which the commodity has been taken out in the memory 32. Then, the processor 31 stores information regarding the take-out position and the like stored in the memory 32 in the shelf management database 42 in association with the commodity subjected to the take-out processing.

In ACT53, the processor 31 notifies the payment apparatus 2 of information indicating the taken out commodity (commodity placed on the cash register table 3) after the processor 31 moves the commodity to the delivery position. With this configuration, the payment apparatus 2 acquires the information regarding the commodity taken out from the shelf 4 and placed on the cash register table 3 by the robot 1 as the information regarding the payment target commodity. The payment apparatus 2 is capable of executing payment processing on the commodity price including the commodity taken out by the robot 1 from the shelf 4 on the basis of the information regarding the commodity from the processor 31.

It should be noted that the processor 31 may be configured to keeps holding the commodity held by the holding mechanism 15 (commodity taken out from the shelf 4) until the payment of the payment apparatus 2 is completed. That is, the processor 31 may control the first arm 13A to place the commodity on the cash register table 3 after the payment of the payment apparatus 2 is completed, rather than immediately placing the commodity taken out from the shelf 4 by the holding mechanism 15 of the first arm 13A.

After the first arm 13A moves the commodity to the delivery position, the processor 31 may perform shelf check processing of checking the state and the like of the shelf 4 after the commodity is taken out. For example, if the user detected by the sensor 11 has gone, it is predicted that it may be impossible to directly receive a next order of the commodity from the user. Therefore, the processor 31 may perform shelf check processing if the user detected by the sensor 11 has gone. In this case, the processor 31 may be configured not to execute shelf check processing while the sensor 11 detects the user.

When the payment apparatus 2 completes the payment processing, then in ACT54, the processor 31 determines whether or not to perform shelf check processing. If the processor 31 does not perform shelf check processing (NO in ACT54), the processor 31 terminates the processing shown in Fig. 8. If the processor 31 performs shelf check processing (YES in ACT54), the processing of the processor 31 shifts to ACT55. In ACT55, the processor 31 moves the arm camera 16 for capturing an image of an area including the position at which the taken out commodity has been present. In the configuration example shown in Fig. 1, the arm camera 16 is provided to the distal end portion of the articulated arm 14 of the first arm 13A together with the holding mechanism 15.
Therefore, the processor 31 moves the arm camera 16 (distal end portion of the first arm 13A) to the take-out position at which the commodity has been taken out. That is, the arm camera 16 at the distal end portion of the first arm 13A is moved to the take-out position at which the take-out of the commodity has been performed in order to capture an image of the position at which the taken out commodity has been present.

When the arm camera 16 is moved to the take-out position, then in ACT56, the processor 31 captures an image of the area including the position at which the commodity has been present by the use of the arm camera 16. When the image of the area including the position at which the commodity has been present is captured by the use of the arm camera 16, then in ACT57, the processor 31 determines whether or not the next commodity is present at the position on the shelf 4 at which the taken out commodity has been present on the basis of the image acquired by image-capturing of the arm camera 16.

If the next commodity is not present at the position on the shelf 4 at which the taken out commodity has been present (YES in ACT57), the processing of the processor 31 shifts to ACT58. In ACT58, the processor 31 determines whether or not a stock (hereinafter, referred to as a store stock) of a commodity identical to the taken out commodity, which is to be replaced on the shelf 4, is present. For example, the processor 31 refers to the commodity management database 41 and determines whether or not the store stock for the taken out commodity is present.

If the processor 31 determines that the store stock is present (YES in ACT58), the processing of the processor 31 shifts to ACT59. In ACT59, the processor 31 informs the manager or the employee of the fact that the commodity is to be replaced on the shelf 4. For example, the processor 31 notifies the manager or the employee of the fact that the commodity is to be replaced on the shelf 4 or provides the manager or the employee with information indicating the commodity to be replaced on the shelf 4 by mail or a message. As a specific example, the processor 31 provides the manager or the employee with mail or a message saying "Commodity shelf has no xxx. Please replenish it", for example.

If the processor 31 determines that the store stock is not present (NO in ACT58), the processing of the processor 31 shifts to ACT60. In ACT60, the processor 31 notifies the manager or the employee of the fact that the store stock for the taken out commodity is not present. For example, the processor 31 notifies the manager or the employee of the fact that the commodity is not present on the shelf 4 and the store stock is also not present by mail or a message. As a specific example, the processor 31 provides the manager or the employee with mail or a message saying "xxx is not present on the commodity shelf nor in stock. Please order it", for example.

Then, after this notification in ACT59 and ACT60, the processing of the processor 31 shifts to ACT6. Further, if the next commodity is present at the position on the shelf 4 at which the taken out commodity has been present (NO in ACT57), then the processing of the processor 31 shifts to ACT61. In ACT61, the processor 31 stores information indicating the presence/absence of the commodity on the shelf 4 as the shelf stock in the shelf management database 42 and updates the shelf management database 42. For example, if the next commodity is present at the position at which the taken out commodity has been present, the processor 31 stores (updates) the presence of the shelf stock for the taken out commodity in the shelf management database 42. Further, if the next commodity is not absent at the position at which the taken out commodity has been present, the processor 31 stores (updates) the absence of the shelf stock for the taken out commodity in the shelf management database 42.

Moreover, after the processor 31 captures an image of the position at which the commodity has been present with the arm camera 16, the processor 31 moves the articulated arm 14 of the first arm 13A from the take-out position to a predetermined stand-by position in ACT62. For example, the processor 31 calculates a route, i.e., driving procedure for the first arm 13A for the articulated arm 14 of the first arm 13A to move from the take-out position to the stand-by position. The processor 31 moves the articulated arm 14 of the first arm 13A to the stand-by position, using the calculated route. Subsequently, in ACT63, the processor 31 stores the route to move the articulated arm 14 of the first arm 13A from the take-out position to the stand-by position in the shelf management database 42.

The robot 1 causes the articulated arm 14 of the first arm 13A to stand by at the predetermined stand-by position under the stand-by state. Therefore, when the robot 1 receives a next order from the user, the robot 1 moves the articulated arm 14 of the first arm 13A from the stand-by position to a take-out position of the next ordered commodity. If an identical commodity (commodity having an identical commodity name) is at substantially the same take-out position, a route opposite to the route to move from the take-out position to the stand-by position can be a movement route for moving from the stand-by position to the take-out position. The shelf management database 42 stores such a movement route from the take-out position to the stand-by position. With this configuration, if the robot 1 subsequently takes out the identical commodity, the robot 1 is enabled to determine a movement route to move the articulated arm 14 of the first arm 13A on the basis of the route used in the past.

As described above, the commodity take-out apparatus according to the embodiment is a robot that takes out one commodity at the front from the shelf on which the identical commodities aligned in a line are arranged in such a manner that the identical commodities are pressed to the front. The robot includes the arms, the holding mechanisms, the controller, and the like. The arm includes the holding mechanism and moves the position of the holding mechanism in the space. The controller operates the arm to thereby move the holding mechanism to the take-out position depending on the position of the take-out target commodity arranged on the shelf. The holding mechanism holds the side surfaces while tilting the take-out target commodity in the front direction of the shelf 4 at the take-out position. The arm takes out the commodity held by the holding mechanism from the shelf and moves the commodity to the delivery position. With this configuration, even if no space is present on both sides of the commodity arranged on the shelf, the holding mechanism can hold the both side surfaces of the commodity tilted in the front direction of the shelf 4, and the commodity take-out apparatus can realize reliable take-out of the commodity.

Further, as described above, the commodity take-out apparatus according to the embodiment includes the two arms.
A mechanism of one arm may tilt the take-out target commodity in the front direction of the shelf 4 and make the take-out target commodity fall in the front direction of the shelf 4 and a retaining mechanism of the other arm may retain the commodity falling in the front direction of the shelf 4. With this configuration, one commodity present at the front of the shelf can be taken out with a simple configuration.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A commodity take-out apparatus configured to take out a commodity of identical commodities, which are arranged on a shelf to be aligned from a front to a back of the shelf, from a front side of the shelf, the apparatus comprising:
an arm including a distal end portion movable to a take-out position depending on an arrangement position of each of the commodities arranged on the shelf;
a tilting mechanism which is provided to the distal end portion of the arm and tilts a take-out target commodity in a front direction of the shelf while the tilting mechanism is held in contact with an upper surface of the take-out target commodity arranged on the shelf in a state in which the distal end portion is moved to the take-out position; and
a retaining mechanism which is provided to the distal end portion of the arm and retains the take-out target commodity in the state in which the take-out target commodity is tilted by the tilting mechanism.

2. The commodity take-out apparatus according to claim 1, wherein
the tilting mechanism includes
an articulated first finger which is provided to the distal end portion of the arm and is to be held in contact with the upper surface of the take-out target commodity.

3. The commodity take-out apparatus according to claim 1 or 2, wherein
the retaining mechanism sandwiches the take-out target commodity from both side surfaces of the commodity in the state in which the take-out target commodity is tilted by the tilting mechanism.

4. The commodity take-out apparatus according to any one of claims 1 to 3, wherein
the tilting mechanism tilts the take-out target commodity and makes the take-out target commodity fall in the front direction, and
the retaining mechanism receives and retains the take-out target commodity falling in the front direction through the tilting mechanism.

5. The commodity take-out apparatus according to any one of claims 1 to 4, further comprising:
a microphone that inputs audio; and
a controller that determines a take-out position depending on an arrangement position of the take-out target commodity on a basis of audio input by the microphone.

6. The commodity take-out apparatus according to claim 2, wherein
the articulated first finger of the tilting mechanism tilts the take-out target commodity by moving a distal end portion of the first finger in the front direction while holding the upper surface of the take-out target commodity with the distal end portion of the first finger.

7. The commodity take-out apparatus according to claim 2 or 6, wherein
the retaining mechanism includes
a pair of articulated second fingers which are provided to the distal end portion of the arm and sandwich the take-out target commodity while the pair of articulated second fingers are held in contact with both side surfaces of the take-out target commodity in a state in which the take-out target commodity is tilted by the first finger.

8. The commodity take-out apparatus according to claim 7, wherein
the second fingers of the retaining mechanism stand by at predetermined positions at which the second fingers of the retaining mechanism are to support the take-out target commodity tilted when the first finger of the tilting mechanism tilts the take-out target commodity.

9. The commodity take-out apparatus according to claim 8, wherein
the second fingers of the retaining mechanism sandwich the take-out target commodity after the second fingers of the retaining mechanism support the take-out target commodity at the predetermined positions.

10. The commodity take-out apparatus according to claim 9, wherein
the second fingers of the retaining mechanism take out the take-out target commodity from the shelf by moving the take-out target commodity in a state in which the second fingers of the retaining mechanism sandwich the take-out target commodity.
